Europäisches Patentamt

European Patent Office

Office européen des brevets

(19)

(11) **EP 0 785 409 B1**

(12) **FASCICULE DE BREVET EUROPEEN**

(45) Date de publication et mention
de la délivrance du brevet:
**18.04.2001 Bulletin 2001/16**

(51) Int Cl.[7]: **G01B 5/20**, G02C 13/00

(21) Numéro de dépôt: **97400066.3**

(22) Date de dépôt: **15.01.1997**

(54) **Appareil de lecture de contour notamment pour verre de lunettes**

Vorrichtung zum Abtasten von Konturen, besonders für Brillengläser

Device for contour reading, namely for binocular glasses

(84) Etats contractants désignés:
**BE DE ES GB IT**

(30) Priorité: **17.01.1996 FR 9600487**

(43) Date de publication de la demande:
**23.07.1997 Bulletin 1997/30**

(73) Titulaire: **ESSILOR INTERNATIONAL
Compagnie Générale d'Optique
F-94220 Charenton le Pont (FR)**

(72) Inventeurs:
• **Chansavoir, Alain
95160 Montmorency (FR)**
• **Joncour, Christian
94410 Saint Maurice (FR)**

(74) Mandataire: **CABINET BONNET-THIRION
12, Avenue de la Grande-Armée
75017 Paris (FR)**

(56) Documents cités:
**EP-A- 0 083 282       EP-A- 0 647 826
FR-A- 2 652 893       FR-A- 2 669 999
FR-A- 2 728 965       US-A- 3 823 483
US-A- 4 737 918**

• **PATENT ABSTRACTS OF JAPAN vol. 017, no.
536 (P-1620), 27 septembre 1993 & JP 05 149715
A (HONDA MOTOR CO LTD), 15 juin 1993,**
• **PATENT ABSTRACTS OF JAPAN vol. 008, no.
179 (P-295), 17 août 1984 & JP 59 072006 A
(MUTOU KOGYO KK), 23 avril 1984,**
• **PATENT ABSTRACTS OF JAPAN vol. 010, no.
196 (M-497), 10 juillet 1986 & JP 61 038808 A
(NIPPON SEIKO KK), 24 février 1986,**

**Description**

La présente invention concerne d'une manière générale les appareils de lecture de contour du genre comportant des moyens de maintien propres à un support à poste fixe de l'article dont le contour est à lire, et un chariot qui, monté mobile par rapport à ces moyens de maintien, porte un palpeur au bout d'une tige, pour contact avec cet article.

Un appareil de lecture de contour de ce type se trouve notamment décrit dans le brevet français qui, enregistré le 6 octobre 1989 sous le No 89 13079, a été publié sous le No 2 652 893.

S'agissant d'assurer un relevé propre à permettre ensuite le détourage d'un verre de lunettes suivant le contour définitif qui doit être le sien, l'article dont le contour est à lire est, par exemple, la monture de lunettes à équiper, ou, plus précisément, le cercle ou entourage concerné de cette monture de lunettes, lorsqu'une telle monture de lunettes présente effectivement deux cercles ou entourages reliés par un pontet communément appelé nez.

Mais il peut s'agir également d'un simple gabarit, notamment lorsque, suivant un montage communément appelé "montage percé", aucun cercle ou entourage n'est prévu, les verres étant directement reliés l'un à l'autre par un pontet et portant chacun directement une embase sur laquelle est articulée une branche.

Il est nécessaire dans ce cas de percer dans chaque verre au moins deux trous de montage, l'un pour le pontet, l'autre pour l'embase d'une branche.

De manière conventionnelle, ces trous de montage sont implantés à une distance donnée du contour extérieur des verres.

Mais il importe, bien entendu, que leur implantation se fasse très précisément dans une position déterminée, dûment repérée au préalable.

Le gabarit comporte, lui-même, en correspondance, pour ce faire, des trous de montage dans sa zone périphérique.

A ce jour, l'acquisition de la position de ces trous de montage se fait plus ou moins manuellement, et il s'agit d'une opération relativement délicate et incertaine.

La présente invention a d'une manière générale pour objet une disposition permettant d'assurer de manière particulièrement fiable et sûre cette acquisition.

De manière plus précise, elle a pour objet un appareil de lecture de contour du genre comportant des moyens de maintien propres au support d'un gabarit à poste fixe, et un chariot qui, monté mobile en translation par rapport à ces moyens de maintien, porte un palpeur au bout d'une tige, ayant un axe orthogonal à la direction de translation du chariot, cet appareil de lecture de contour étant d'une manière générale caractérisé en ce que, pour le relevé de la position d'un trou de montage dans la zone périphérique du gabarit, il est équipé de moyens de détection dont un composant au moins, solidaire en mouvement du chariot, est un émetteur-récepteur qui est orienté parallèlement à l'axe de la tige portant le palpeur et qui se situe à une distance donnée de l'axe de la tige portant le palpeur, du côté de la zone centrale des moyens de maintien du gabarit.

En pratique, cette distance est égale à celle séparant de la tranche du gabarit le ou les trous de montage que comporte celui-ci, augmentée de la moitié du diamètre de la tige portant le palpeur.

Il suffit donc que la lecture de contour du gabarit se fasse par application de cette tige à la tranche de celui-ci, pour que, au défilement, le composant solidaire du chariot détecte le ou les trous de montage dont la position est à repérer.

Par exemple, ce composant est porté par le chariot.

En variante, il est porté par le palpeur.

En variante, il y a un composant tant sur le chariot que sur le palpeur.

Dans tous les cas, l'acquisition de la position du ou des trous de montage se fait avantageusement lors même de la lecture de contour du gabarit, et elle peut être immédiatement exploitée en conséquence, notamment par présentation de l'image de ce gabarit sur un écran, lorsqu'un tel écran est associé à l'appareil de lecture de contour.

Elle peut également être mémorisée si désiré, et être transmise à un ou plusieurs dispositifs de détourage et de perçage de trous de montage en même temps que le relevé relatif à la forme de la monture de lunettes concernée.

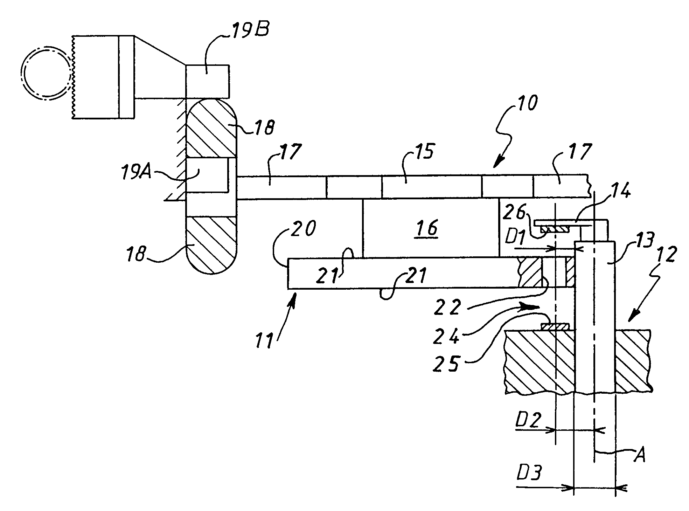

Les caractéristiques et avantages de l'invention ressortiront d'ailleurs de la description qui va suivre, à titre d'exemple, en référence au dessin schématique annexé dont la figure unique est une vue partielle en élévation-coupe d'un appareil de lecture de contour suivant l'invention.

Sur cette figure, seuls ont été représentés les éléments de cet appareil de lecture de contour nécessaires à la compréhension de l'invention.

Il suffit, à cet égard, de préciser que cet appareil de lecture de contour comporte des moyens de maintien 10 propres au support, à poste fixe, d'un gabarit 11, et un chariot 12 qui, monté mobile par rapport aux moyens de maintien 10, porte, au bout d'une tige 13, un palpeur 14.

Les moyens de maintien 10 ne relevant pas en propre de la présente invention, ils ne seront pas décrits dans tous leurs détails ici.

Il suffira d'indiquer que, dans la forme de réalisation représentée, ils comportent une platine 15 équipée, d'une part, d'un bloc 16, sur lequel est rapporté le gabarit 11, et, d'autre part, de deux bras 17, présentant eux-mêmes chacun deux doigts 18.

Pour chacun des bras 17, l'un ou l'autre des doigts 18 peut être pincé entre deux doigts de soutien 19A, 19B, l'un fixe, l'autre mobile, appartenant à l'appareil de lecture de contour.

De tels moyens de maintien 10 se trouvent par exemple décrits dans la demande de brevet français enregistrée le 30 décembre 1994 sous le No 94 15940 et publiée le 5 juillet 1996 sous le n° 2 728 965.

Le chariot 12 ne fait pas lui non plus par lui-même l'objet de la présente invention, et il ne sera donc pas non plus décrit dans tous ses détails ici.

Il n'a d'ailleurs été que très partiellement représenté sur la figure.

Par exemple, pour un repérage en coordonnées polaires, ce chariot 12 est monté mobile en translation sur une table elle-même montée rotative sur un plateau.

Une disposition de ce type se trouve notamment décrite dans le brevet français No 89 13079 déjà mentionné ci-dessus.

Suivant des dispositions qui ne relèvent pas non plus de la présente invention, la tige 13 portant le palpeur 14 est orthogonale à la direction de translation du chariot 12 et elle est montée mobile suivant son axe A sur celui-ci.

En pratique, cette tige 13 se réduit à un fût cylindrique de section transversale circulaire au bout duquel le palpeur 14 est monté rotatif autour de l'axe A.

De manière connue en soi, enfin, le gabarit 11 se présente sous la forme générale d'une plaquette, dont la tranche 20, droite, s'étend perpendiculairement à ses faces principales 21, et qui présente, dans sa zone périphérique, à une distance $D_1$ de sa tranche 20, au moins un trou de montage 22.

Suivant l'invention, pour le relevé de la position de ce trou de montage 22, l'appareil de lecture de contour est équipé de moyens de détection 24 dont un composant, 25, au moins, solidaire en mouvement du chariot 12 suivant des dispositions décrites plus en détail ultérieurement, se situe à une distance $D_2$ donnée de l'axe A de la tige 13 portant le palpeur 14, du côté de la zone centrale des moyens de maintien 10 du gabarit 11.

Par exemple, ce composant 25 est un émetteur récepteur porté par le chariot 12 et orienté en direction des moyens de maintien 10.

En service, la tige 13 portant le palpeur 14 est appliquée par sa surface extérieure contre la tranche 20 du gabarit 11, comme représenté sur la figure.

Soit $D_3$ le diamètre de cette tige 13.

Par construction :

$$D_2 = D_1 + 0,5\ D_3$$

Si la réflexion, sur le gabarit 11, du rayonnement émis par le composant 25 est suffisante pour obtenir un signal de retour correct, c'est-à-dire exploitable, ce composant 25 peut être seul à être mis en oeuvre.

En effet, au passage du trou de montage 22, le signal de retour disparaît, ce qui suffit au repérage de la position de ce trou de montage 22.

Si, par contre, la réflexion, sur le gabarit 11, du rayonnement émis par le composant 25 est insuffisante, le palpeur 14 porte, à l'aplomb de ce composant 25, un miroir 26, comme représenté sur la figure.

Grâce à ce miroir 26, le composant 25 reçoit, au passage du trou de montage 22, un signal de retour suffisant, ce qui, comme précédemment, suffit au repérage de la position de ce trou de montage 22.

Sur l'écran associé, non représenté, l'opérateur peut, dans l'un et l'autre cas, pointer ainsi successivement les trous de montage 22 que présente le gabarit 11.

Ce pointage peut par exemple se faire à l'aide d'un réticule mobile.

Il peut également se faire à l'aide d'un curseur du type de celui commandé par une "souris" sur un ordinateur.

A chaque fois, le relevé correspondant est mémorisé.

A cet effet, l'appareil suivant l'invention comporte des moyens de mémorisation.

Il comporte également des moyens de transmission pour permettre de transmettre à un ou plusieurs dispositifs de détourage et de perçage de trous de montage l'acquisition ainsi faite de la position des trous de montage, par exemple en même temps que celle relative à la forme de la monture de lunettes concernée.

Ces moyens de mémorisation et de transmission étant connus par eux-mêmes et relevant de l'homme de l'art, ils ne seront pas décrits ici.

La présente invention ne se limite d'ailleurs pas à la forme de réalisation décrite et représentée, mais englobe toute variante d'exécution.

En particulier, au lieu d'être porté par le chariot, l'émetteur récepteur solidaire de celui-ci peut être porté par le palpeur.

En variante, l'un quelconque des éléments que constituent le chariot et le palpeur peut porter un composant formant un émetteur tandis que l'autre de ces éléments porte un composant formant un récepteur.

Dans tous les cas, portés directement, ou indirectement, par le chariot, le ou les composants mis en oeuvre sont solidaires en mouvement de celui-ci.

## Revendications

1. Appareil de lecture de contour, notamment pour verre de lunettes, du genre comportant des moyens de maintien (10) propres au support d'un gabarit (11) à poste fixe, et un chariot (12) qui, monté mobile en translation par rapport à ces moyens de maintien (10), porte un palpeur (14) au bout d'une tige (13) ayant un axe (A) orthogonal à la direction de translation du chariot, caractérisé en ce que, pour le relevé de la position d'un trou de montage (22) dans la zone périphérique du gabarit (11), il est équipé de moyens de détection (24) dont un composant (25), au moins, solidaire en mouvement du chariot (12), est un émetteur-récepteur qui est orienté parallèlement à l'axe (A) de la tige (13) portant le palpeur (14) et qui se situe à une distance ($D_2$) donnée de l'axe (A) de la tige (13) portant le palpeur (14), du côté de la zone centrale des moyens de maintien (10).

2. Appareil de lecture de contour suivant la revendication 1, caractérisé en ce que le composant (25) est un émetteur récepteur porté par le chariot (12) et orienté en direction des moyens de maintien (10).

3. Appareil de lecture de contour suivant la revendication 2, caractérisé en ce que, à l'aplomb du composant (25), le palpeur (14) porte un miroir (26).

4. Appareil de lecture de contour suivant l'une quelconque des revendications 1 à 3, caractérisé en ce que la distance ($D_2$) du composant (25) par rapport à l'axe (A) de la tige (13) portant le palpeur (14) est égale à celle ($D_1$) séparant de la tranche (20) du gabarit (11) le trou de montage (22), augmentée de la moitié du diamètre ($D_3$) de la tige (13).

5. Appareil de lecture de contour suivant l'une quelconque des revendications 1 à 4, caractérisé en ce qu'il comporte des moyens de mémorisation et des moyens de transmission.

## Patentansprüche

1. Umriss-Abtastvorrichtung, insbesondere für Brillengläser, vom Typ, umfassend eine Halteeinrichtung (10), die eine Schablone (11) feststehend stützen kann, sowie einen Schlitten (12), welcher translatorisch beweglich mit Bezug auf die Halteeinrichtung (10) montiert, einen Taster (14) am Ende eines Schaftes (13), welcher eine Achse (A) orthogonal zu der Translationsrichtung des Schlittens aufweist, trägt, dadurch gekennzeichnet, dass zur Ermittlung der Position eines Montageloches (22) in der peripheren Zone der Schablone (11) eine Erfassungseinrichtung (24) vorgesehen ist, von der zumindest ein Bauteil (25), bewegungsfest mit dem Schlitten (12) verbunden, ein Sender/Empfänger ist, welcher parallel zu der Achse (A) des Schaftes (13), der den Taster (14) trägt, ausgerichtet ist und sich bei einem gegebenen Abstand ($D_2$) von der Achse (A) des Schaftes (13), der den Taster (14) trägt, an der Seite der mittleren Zone der Halteeinrichtung (10) befindet.

2. Umriss-Abtastvorrichtung nach Anspruch 1, dadurch gekennzeichnet, dass das Bauteil (25) ein Sender/Empfänger ist, welcher von dem Schlitten (12) gestützt und in der Richtung der Halteeinrichtung (10) ausgerichtet ist.

3. Umriss-Abtastvorrichtung nach Anspruch 2, dadurch gekennzeichnet, dass gegenüberstehend dem Bauteil (25) der Taster (14) einen Spiegel (26) trägt.

4. Umriss-Abtastvorrichtung nach einem der Ansprüche 1 bis 3, dadurch gekennzeichnet, dass der Abstand ($D_2$) des Bauteiles (25) mit Bezug auf die Achse (A) des Schaftes (13), welcher den Taster (14) trägt, gleich ist zu jenem ($D_1$), welcher den Rand (20) der Schablone (11) von dem Montageloch (22) trennt, erhöht um die Hälfte des Durchmessers ($D_3$) des Schaftes (13).

5. Umriss-Abtastvorrichtung nach einem der Ansprüche 1 bis 4, dadurch gekennzeichnet, dass sie eine Speichereinrichtung und eine Übertragungseinrichtung umfasst.

## Claims

1. A contour reading apparatus, in particular for a spectacles lens, of the kind comprising holding means (10) for supporting a template (11) in a fixed position, and a carriage (12) which, mounted movably with a translatory movement with respect to said holding means (10), carries a sensor (14) at the end of a rod (13) having an axis (A) which is orthogonal with respect to the direction of translatory movement of the carriage, characterised in that, for detecting the position of a fitting hole (22) in the peripheral zone of the template (11), it is provided with detection means (24) of which one component (25) at least, which is fixed in respect of movement to the carriage (12), is an emitter-receiver which is oriented in parallel relationship with the axis (A) of the rod (13) carrying the sensor (14) and which is disposed at a given distance ($D_2$) from the axis (A) of the rod (13) carrying the sensor (14), on the side of the central zone of the holding means (10).

2. A contour reading apparatus according to claim 1 characterised in that the component (25) is an emitter-receiver carried by the carriage (12) and oriented in the direction of the holding means (10).

3. A contour reading apparatus according to claim 2 characterised in that, in vertical alignment with the component (25), the sensor (14) carries a mirror (26).

4. A contour reading apparatus according to any one of claims 1 to 3 characterised in that the distance ($D_2$) of the component (25) with respect to the axis (A) of the rod (13) carrying the sensor (14) is equal to that ($D_1$) separating the fitting hole (22) from the edge face (20) of the template (11), increased by half the diameter ($D_3$) of the rod (13).

5. A contour reading apparatus according to any one of claims 1 to 4 characterised in that it comprises memory means and transmission means.